# EUROPEAN PATENT APPLICATION

(11) **EP 4 488 845 A1**
(43) Date of publication of application: **08.01.2025**
(21) Application number: 23184012.5
(22) Date of filing: 06.07.2023
(51) Int. Cl.: G06F 16/25

(54) **METHOD FOR INTEGRATING AND ANALYSING HETEROGENOUS SOURCE DATA**

(30) Priority: 04.07.2023 PT 2023118799
(71) Applicant: Bussola Diligente - Consultoria, Lda., 4520-632 S. João de Ver (PT)
(72) Inventor: Ribeiro Bastos, Pedro Alexandre, 4520-632 S. João de Ver (PT); Amorim Alves de Araújo, Tiago Filipe, 4520-632 S. João de Ver (PT)
(74) Representative: Pereira da Cruz, Joao

(57) **Abstract**

The present application relates to methods for integrating and analysing heterogenous data (3) from heterogenous source applications (2), in order to provide a solution to the denormalization inherent to the data models native to web-based database platforms, each one following a particular data configuration and, therefore, not respecting a single and standardized way of presenting data, not favouring a structured aggregation of information. To achieve this goal, the present application describes a computer-implemented method comprising: executing a computational data collection routine (1) to access and load heterogenous source data (3); providing an heterogenous data integration module (4) for transforming heterogeneous source data (3) into target data (5); implementing a data analysis process (6) based at least on target data (5), to generate output data (7); and feeding a normalized database (8) with output data (7).

## Description

### FIELD OF THE APPLICATION

The present application is enclosed in the field of integration of data from heterogeneous source applications. More specifically, the present application relates to methods for integrating and analysing heterogenous data from heterogenous source applications.

### PRIOR ART

Heterogeneous data are any data with high variability of data types and formats. Data from distinct source applications are often heterogenous because they stem from independent and disparate activities and are managed and maintained by different application owners. Therefore, these data often differ both in their values and in their structures, even if they relate to the same phenomena.

The ability to deal with data heterogeneity in an effective and efficient way is of utmost importance for data integration systems and a prerequisite to several other applications. For instance, when focusing on the Web of data, it enables semantic search in terms of entities and relations on top of the Web of text and deep reasoning using related ontologies, thus creating the Web of knowledge.

Therefore, when dealing with multiple heterogeneous data source applications, the final aim is often to fuse the different manifestations of the same real-world entity to get a unified view that gives users the illusion of interacting with one single data source.

Currently, databases used for design and engineering employ a variety of different data models, interface languages, naming conventions, data semantics, schemas, and data representations. Thus, a fundamental problem for concurrent engineering is the sharing of heterogeneous information among a variety of design resources. Successful concurrent engineering also requires access to data from multiple stages of the design life-cycle, but the diversity among data from different tools and at different stages creates serious barriers.

The present solution intended to innovatively overcome such issues.

### SUMMARY OF THE APPLICATION

It is therefore the object of the present application to be a solution to the denormalization inherent to the data models native to web-based database platforms, each one following a particular data configuration and, therefore, not respecting a single and standardized way of presenting data, not favouring a structured aggregation of information.

To achieve this goal, the present application describes a computer-implemented method for integrating and analysing heterogenous source data obtained from a plurality of heterogeneous source applications, which comprises the steps of:
- executing a computational data collection routine to access and load heterogenous source data from at least one heterogeneous source application;
- providing an heterogenous data integration module with specifications for transforming heterogeneous source data into target data;
- implementing a data analysis process based at least on target data, to generate output data;
- feeding a normalized database with output data.

More specifically, the step of providing an heterogenous data integration module with specifications comprises:
- inputting a first level data structure specification describing an intermediate representation of data, and a second level data structure specification describing a target data representation;
- implementing an extraction framework specification to extract data from the heterogeneous source data in order to generate an intermediate representation of data;
- implementing a data normalization framework specification to transform the intermediate representation of data into target data.

The proposed solution uses and orchestrates the simultaneous operation of a set of innovative procedures based on, for example, Robotic Process Automation, Natural Processing Language and Artificial Intelligence mechanisms in order to carry out the collection of data from the various heterogeneous source applications, their processing and analysis, as well as a set of advanced data analysis aimed at providing aggregated information to a user.

The synchronized and automated operation of all these elements with the aim of producing knowledge encapsulates the innovative nature of the method described in the present application, as well as represents a technical challenge in the sense of putting all the elements in an effective and efficient dialogue with each other.

### DESCRIPTION OF FIGURES

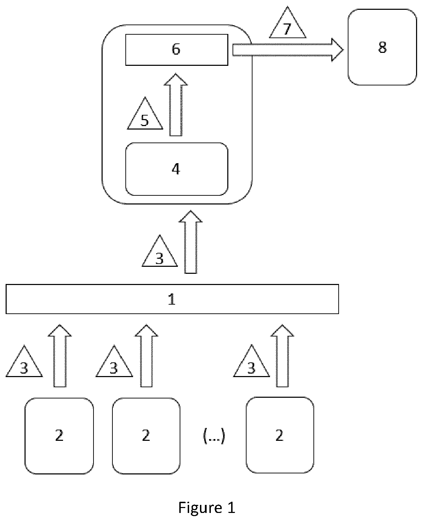

Figure 1 - a block diagram illustrating a first exemplary chain of data elements according to the method described in the present application. The reference sign represents:
   1 - computational data collection routine;
   2 - heterogeneous source application;
   3 - heterogeneous source data;
   4 - heterogenous data integration module;
   5 - target data;
   6 - data analysis process;
   7 - output data;
   8 - normalized database.

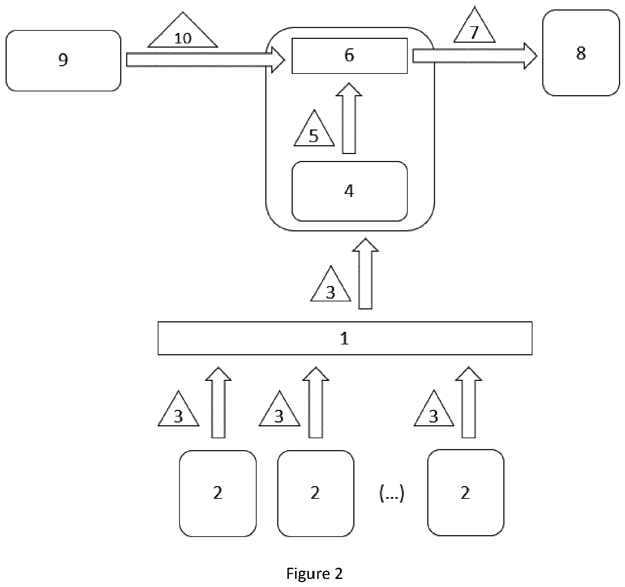

Figure 2 - a block diagram illustrating a second exemplary chain of data elements according to the method described in the present application. The reference sign represents:
   1 - computational data collection routine;
   2 - heterogeneous source application;
   3 - heterogeneous source data;
   4 - heterogenous data integration module;
   5 - target data;
   6 - data analysis process;
   7 - output data;
   8 - normalized database;
   9 - user interface platform;
   10 - user profile data.

### DETAILED DESCRIPTION

The more general and advantageous configuration of the method described in the present application are presented in the Summary of the application. Such configuration is detailed below in accordance with other advantageous and/or preferred embodiments of implementation of the method herein described.

In a preferred aspect of the computer-implemented method described in the present application, the integration and analysis of heterogenous source data (3) obtained from a plurality of heterogeneous source applications (2), involves:
- executing a computational data collection routine (1) to access and load heterogenous source data (3) from at least one heterogeneous source application (2);
- providing an heterogenous data integration module (4) with specifications for transforming heterogeneous source data (3) into target data (5);
- implementing a data analysis process (6) based at least on target data, to generate output data (7);
- feeding a normalized database (8) with output data (7).

The normalized database (8) is used to store normalized data, and it is configured to be accessible to a user, through any known user-interface means. Consequently, a user is able to consult the database (8) to access structured and standardized data, coming from different heterogenous sources of information, which, otherwise, would be non-standardized, making accessing and consulting information more effective.

Additionally, the output data (7) being in a normalized fashion, may also be used to prepare automatic reports depending on the nature and purpose of the data analysis process (6). Such analysis reports may then be accessible to an end-user.

The developed method makes it possible to integrate new sources of heterogeneous data into a normalized database over time and without considerable additional effort, since it is only necessary to retrain the computational data collection routine to collect data from the new "Provider"/heterogeneous source application (2).

In one embodiment, the computational data collection routine (1) is implemented using a robot process automation to build, deploy and manage software robots to interact with heterogeneous source applications (2). More particularly, the robots are responsible for converting the information from heterogeneous source applications (2), such as web files or web pages, into a database model, in a specific format, that may be oriented towards a later extraction more directed towards the production of reports.

The heterogenous data integration module (4) includes specifications adapted to:
- input a first level data structure specification describing an intermediate representation of data, and a second level data structure specification describing a target data (5) representation;
- implementing an extraction framework specification to extract data from the heterogeneous source data (3) in order to generate an intermediate representation of data; and
- implementing a data normalization framework specification to transform the intermediate representation of data into target data (5).

In another embodiment of the method, the extraction framework specification comprises parsing the first level data structure specification to transform extracted heterogeneous source data into an intermediate representation of data. More specifically, the heterogeneous source data (3) is subject to an extraction and integration process using the extraction framework which may be developed in the python language, with the aim of extracting and storing data with a higher level of structure so that they can be object of deeper analysis, using data normalization framework specification.

In another embodiment of the method, the data normalization framework specification comprises executing Natural Language Processing computational routines configured to:
- create a logical structure diagram from the first level data structure describing intermediate representation of data, defined by a plurality of smaller data components;
- execute an information extraction computational routine to detect and categorize essential information data;
- parse the second level data structure specification to transform essential information data into target data (5).

More specifically, to support an automatic data analysis process, a data normalization framework such as the spaCy may be used, supported by a Natural Language Processing process, which processes data in natural language. In this sense, in one example, where the heterogeneous source data relates to a web page comprised by textual information, the text in natural language is first processed in order to be segmented into words, punctuation, etc., followed by the implementation of the application of, for example, Named Entity Recognition models/heuristics aimed at identifying "real world" objects/entities (e.g. companies, people/players, objects, etc.).

One of the existing problems in the quality of information that is made available on such heterogeneous source applications (2) is the question of the non-uniqueness of the entities that are referenced; The same real entity can be referred to with different nomenclatures, subtle differences in designation, etc. In order to circumvent this issue, a searching mechanism may be included being to find, based on certain heuristics, the cases in which entities referenced in the procedures are actually the same.

In another embodiment of the method, the Natural Language Processing computational routines include implementing Natural Language Processing heuristics adapted to:
- text pre-processing intermediate representation of data;
- identify table information;
- extract essential information data.

In one embodiment of the method, text pre-processing heuristics may include:
- separating numbers or letter from unintended symbols or punctuation;
- removing multiple spaces or paragraphs;
- separating previous/following unintended character for each unit measure symbol.

In another embodiment of the method, a Camelot extraction heuristic may be used to identify table information, such as:
- verify column tables;
- verify if the tables have more columns and rows than a predefined threshold;
- obtain header keywords; and
- extract table items.

Additionally, in another embodiment of the method, extracting essential information data may include implementing the following sequence of algorithms:
- Fuzzy matching;
- Entity ruler extraction;
- Item construction; and
- Item verification.

In another embodiment of method, the computational data collection routine (1) is executed periodically.

In another embodiment of method, the computational data collection routine (1) is implemented via a File Transfer Protocol or a web Scraping process.

In another embodiment of method, the data analysis process (6) is a pattern recognition algorithm and the method further comprises:
- providing a user interface platform (9) with input means for generating user profile data (10);
- implementing the data analysis process based at least on target data (5) and on the user profile data (10), to generate output data (7).

More specifically, user profile data (9) may include user-preference data, and wherein, the data analysis process (6) is configured to identify patterns in target data matching with user-preference data; the output data (7) being data patterns that match the user-preference data.

In another embodiment of method, the data analysis process (6) relates to Business Intelligence algorithms.

Finally, in another embodiment of method, it further comprises:
- accessing to a translation service adapted to dynamically translate output data (7) into a preconfigured language,
optionally, the translation service is a cloud service.

Specifically, data procedures published on online heterogeneous source applications are usually written in an original language of the entities that publish them. In order to facilitate the understanding of said information, the method carries out a translation of the texts from the original language into the configured language of a user. This translation process is carried out using real-time translation Cloud services, which allow for superior content reliability when compared to translation processes based on word dictionaries. In this way, all reports that may be produced based on output data (7) produced by the method are presented in a language that is easy for the end user to understand, which is an obvious added value.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. Computer-implemented method for integrating and analysing heterogenous source data (3) obtained from a plurality of heterogeneous source applications (2), comprising the steps of:
- executing a computational data collection routine (1) to access and load heterogenous source data (3) from at least one heterogeneous source application (2);
- providing an heterogenous data integration module (4) with specifications for transforming heterogeneous source data (3) into target data (5);
- implementing a data analysis process (6) based at least on target data, to generate output data (7);
- feeding a normalized database (8) with output data (7);
wherein,
providing an heterogenous data integration module (4) with specifications comprises:
- inputting a first level data structure specification describing an intermediate representation of data, and a second level data structure specification describing a target data representation;
- implementing an extraction framework specification to extract data from the heterogeneous source data (3) in order to generate an intermediate representation of data;
- implementing a data normalization framework specification to transform the intermediate representation of data into target data (5).

2. The method according to claim 1, wherein the extraction framework specification comprises:
- parsing the first level data structure specification to transform extracted heterogeneous source data into an intermediate representation of data.

3. The method according to any of the previous claims, wherein the data normalization framework specification comprises executing Natural Language Processing computational routines configured to:
- create a logical structure diagram from the first level data structure describing intermediate representation of data, defined by a plurality of smaller data components;
- execute an information extraction computational routine to detect and categorize essential information data;
- parse the second level data structure specification to transform essential information data into target data (5).

4. The method according to claim 3, wherein the information extraction computational routine is a Named Entity Recognition routine.

5. The method according to the previous claims 3 and 4, wherein the Natural Language Processing computational routines include implementing Natural Language Processing heuristics adapted to:
- text pre-processing intermediate representation of data;
- identify table information;
- extract essential information data.

6. The method according to claim 5, wherein the heuristic to text pre-process intermediate representation of data includes:
- separating numbers or letter from unintended symbols or punctuation;
- removing multiple spaces or paragraphs;
- separating previous/following unintended character for each unit measure symbol.

7. The method according to claim 5 or 6, wherein the heurist to identify table information is a Camelot heuristic adapted to:
- verify column tables;
- verify if the tables have more columns and rows than a predefined threshold;
- obtain header keywords; and
- extract table items.

8. The method according to any of the claims 5 to 7, wherein extracting essential information data includes implementing the following sequence of algorithms:
- Fuzzy matching;
- Entity ruler extraction;
- Item construction; and
- Item verification.

9. The method according to any of the previous claims, wherein the computational data collection routine (1) is executed periodically.

10. The method according to any of the previous claims, wherein the computational data collection routine (1) is implemented via a File Transfer Protocol or a web Scraping process.

11. The method according to any of the previous claims, wherein the data analysis process (6) is a pattern recognition algorithm.

12. The method according to any of the previous claims, further comprising:
- providing a user interface platform (8) with input means for generating user profile data (9);
- implementing the data analysis process based at least on target data (5) and on the user profile data (9), to generate output data (7).

13. The method according to claims 11 and 12, wherein
user profile data (8) includes user-preference data,
and wherein,
the data analysis process (6) is configured to identify patterns in target data matching with user-preference data; the output data being data patterns that match the user-preference data.

14. The method according to any of the previous claims, wherein the data analysis process (6) relates to Business Intelligence algorithms.

15. The method according to any of the previous claims, further comprising:
- accessing to a translation service adapted to dynamically translate output data into a preconfigured language,
optionally, the translation service is a cloud service.
